# EUROPEAN PATENT APPLICATION

(11) **EP 4 394 199 A1**
(43) Date of publication of application: **03.07.2024**
(21) Application number: 23212905.6
(22) Date of filing: 29.11.2023
(51) Int. Cl.: F16C 35/067, F16B 21/18, F16C 35/073, F16C 35/077, F16F 15/32, F16C 19/06

(54) **RETAINING RING, ELECTRIC MACHINE AND VEHICLE**

(30) Priority: 27.12.2022 CN 202211689702
(71) Applicant: Valeo eAutomotive Germany GmbH, 91056 Erlangen (DE)
(72) Inventor: YING, Renlong, 91056 Erlangen (DE); CHEN, Ci, 91056 Erlangen (DE); ZHAO, Jingjing, 91056 Erlangen (DE); LIU, Jinjin, 91056 Erlangen (DE); CHEN, Zhongxian, 91056 Erlangen (DE); XIONG, Lingyun, 91056 Erlangen (DE); FAN, Pengcheng, 91056 Erlangen (DE)
(74) Representative: Valeo Powertrain Systems

(57) **Abstract**

The present disclosure relates to a retaining ring (1), including: an annular body (2) including an opening (3); an operating part (4) arranged at two sides of the opening, and including operating holes (5) arranged at two sides of the opening (3). The annular body (2) further includes a reinforcing portion (6) arranged opposite the opening (3). The present disclosure further relates to an electric machine including the retaining ring and a vehicle including the electric machine.

## Description

### TECHNICAL FIELD

The present disclosure relates to a retaining ring. In particular, an annular body of the retaining ring comprises a reinforcing portion to increase its strength and adapt to high rotation speed applications. The present disclosure further relates to an electric machine comprising the retaining ring and a vehicle comprising the electric machine.

### BACKGROUND

In an electric machine of a vehicle, the rotor shaft of the rotor is fitted with one or more components, such as a rotor core, end plates, and bearings for rotationally supporting the rotor shaft, etc. A protrusion may be provided at one end of the rotor shaft of the rotor to constrain the axial position of components set thereon, while at the opposite end thereof, a protrusion is inconveniently provided due to the need for assembly. In order to constrain the axial position of the components at this end, it is known to install an additional retaining ring at this end of the rotor shaft.

The retaining ring is an annular member comprising an opening, and its inner diameter is smaller than the diameter of the rotor shaft. The retaining ring may be opened, placed and clamped onto a pre-machined groove on the rotor shaft using tools such as callipers. After being opened, the size of the opening of the retaining ring is larger than the diameter of the groove, so the retaining ring can be removed from the groove or reinstalled in the groove.

When the electric machine is operating, the rotor rotates, and the retaining ring rotates with the rotor shaft of the rotor. The centrifugal force produced by this rotation tends to cause the opening of the retaining ring to open. When the rotation speed of the electric machine reaches a rotation speed threshold that the retaining ring can sustain, the centrifugal force produced by the rotation of the retaining ring is sufficient to make the opening of the retaining ring open to the extent that the retaining ring can detach from the rotor shaft, so that the rotation speed of the electric machine cannot be further increased.

Therefore, a retaining ring is needed that can reduce the extent to which the opening expands at high rotation speeds and is thus difficult to detach from the shaft, so as to increase the rotation speed threshold and adapt to high rotation speed applications.

### SUMMARY

In response to the problems and demands mentioned above, the present disclosure proposes a new type of retaining ring, which solves the above problems and brings about other technical effects by adopting the following technical features.

The retaining ring according to the present disclosure comprises: an annular body comprising an opening; an operating part arranged at two sides of the opening, and comprising operating holes arranged at two sides of the opening. The annular body further comprises a reinforcing portion arranged opposite the opening.

One of the objects of the present disclosure is to provide a retaining ring in which it is possible to reduce the extent to which the opening expands at high rotation speeds, making it difficult to detach from the shaft, increasing the rotation speed threshold, and adapting to high rotation speed applications. The retaining ring according to the present disclosure comprises a reinforcing portion on the annular body arranged opposite the opening of the retaining ring. Such a reinforcing portion increases the strength of the retaining ring, enabling it to resist centrifugal force with relatively small deformation, and the opening degree becomes smaller. Therefore, the rotation speed threshold for detachment of the retaining ring from the shaft is increased and adapted to high rotation speed applications. The inventors of the present disclosure have discovered that, compared with a conventional retaining ring without a reinforcing portion, the rotation speed threshold that the retaining ring according to the present disclosure can sustain can be increased from about 17000 RPM to over 20000 RPM.

The retaining ring according to the present disclosure may also comprise one or more of the following features individually or in combination.

According to one embodiment of the present disclosure, the retaining ring further comprises a balance hole arranged on the reinforcing portion. The reinforcing portion on the retaining ring increases the strength of the retaining ring, but also cause the gravity center of the retaining ring to shift, and the retaining ring is no longer balanced. In this way, after assembly, the gravity center of the retaining ring will shift from the center of the shaft, resulting in imbalance during rotation process. By arranging a balance hole on the reinforcing portion, the deviation of the gravity center caused by the reinforcing portion is counteracted, and the retaining ring restores balance.

According to one embodiment of the present disclosure, the balance hole is symmetrical with respect to a diameter (D) passing through the center of the reinforcing portion.

According to one embodiment of the present disclosure, the retaining ring comprises multiple balance holes, and the multiple balance holes are symmetrical with respect to a diameter (D) passing through the center of the reinforcing portion.

According to the above features, the balance hole is only used to eliminate the imbalance of the reinforcing portion, and will not cause the imbalance of the retaining ring itself.

According to one embodiment of the present disclosure, the balance hole is an oblong hole. The width of the oblong hole is relatively small for the same area, which reduces the negative impact on the reinforcement effect of the reinforcing portion.

According to one embodiment of the present disclosure, the increased width of the reinforcing portion is variable, and/or the increased thickness of the reinforcing portion is variable.

According to one embodiment of the present disclosure, the reinforcing portion has a maximum width at its center, and gradually decreases from its center towards two ends; and/or the reinforcing portion has a maximum thickness at its center, and gradually decreases from its center towards the two ends.

According to the above features, the reinforcing portion has a smooth transition relative to other parts of the annular body, and is largest in size at its center opposite the opening. Such a structure increases the ability of the reinforcing portion to resist expansion of the opening.

According to one embodiment of the present disclosure, the retaining ring is made by stamping.

The present disclosure further relates to an electric machine comprising the retaining ring described above, and the retaining ring is used to constrain an axial position of a bearing on a rotor of the electric machine.

The present disclosure further relates to a vehicle comprising the electric machine described above.

### BRIEF DESCRIPTION OF THE DRAWINGS

The above and other features and advantages of the present disclosure will become more apparent through the following detailed description of exemplary embodiments combined with the accompanying drawings, and the description and the accompanying drawings are only for illustrative purposes and are not intended to limit the scope of the present disclosure in any way. The following accompanying drawings are not intentionally drawn in equal scaling according to actual size, and the focus is on showing the main idea of the present disclosure.
Fig. 1A is a cross-sectional view of a portion of the electric machine according to the present disclosure, wherein a retaining ring is installed on the rotor shaft of the rotor;
Fig. 1B is an enlarged view of the retaining ring in Fig. 1A;
Fig. 2 is a perspective view of the retaining ring according to the present disclosure;
Fig. 3 is a top view of the retaining ring according to the present disclosure.

### DETAILED DESCRIPTION

In order to make the purpose, technical solution and advantages of the embodiments of the present disclosure clearer, the technical solution of the embodiments of the present disclosure will be described clearly and completely below in conjunction with the accompanying drawings of the embodiments of the present disclosure.

Unless otherwise defined, technical terms or scientific terms used herein shall have the common meanings understood by those skilled in the art. Similar words such as "one", "a" or "the" used in the description and claims of the patent application do not indicate a quantity limit, but mean that there is at least one. Similar words such as "comprise" or "include" mean that the elements or objects appearing before the word cover the elements or objects and their equivalents listed after the word. Similar words such as "connecting" or "connection" are not limited to physical or mechanical connections, but may comprise electrical connections, whether direct or indirect. The terms "up", "down", "left", "right", etc. are only used to indicate relative positional relationships, and when the absolute position of the described object changes, the relative positional relationship may also change accordingly.

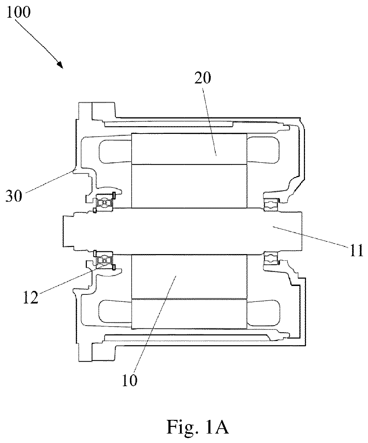

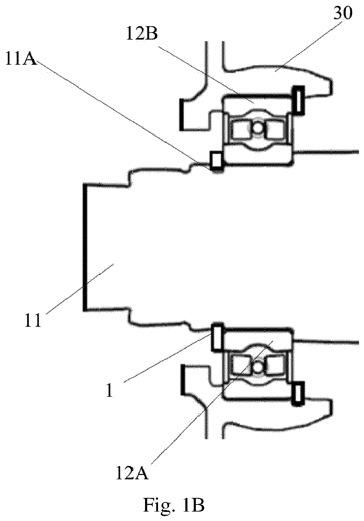

Fig. 1A is a cross-sectional view of a portion of an electric machine 100 according to one embodiment of the present disclosure. The electric machine 100 comprises a rotor 10, a stator 20 and a housing 30. The rotor shaft 11 of the rotor 10 is fitted with a bearing 12. The inner ring 12A of the bearing 12 rotates synchronously with the rotor shaft 11, while its outer ring 12B of is fixed relative to the housing 30 and used to support the rotor 10. The axial position of the bearing 12 is maintained by the retaining ring 1. Referring to the enlarged view of Fig. 1B, the retaining ring 1 is clamped in a groove 11A of the rotor shaft 11, and rotates synchronously with the rotor shaft 11. The retaining ring 1 is in contact with the inner ring 12A of the bearing 12, and thus limits the axial displacement of the bearing 12.

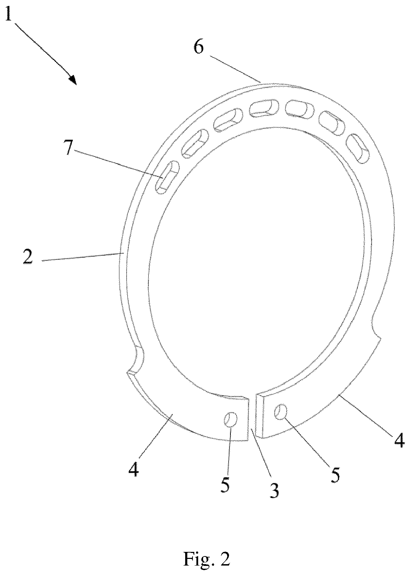

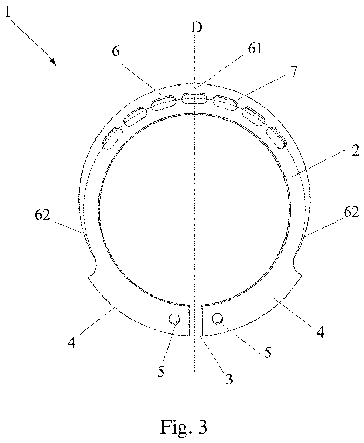

Fig. 2 and Fig. 3 are perspective view and top view of the retaining ring 1 according to one exemplary embodiment of the present disclosure respectively.

As shown in Fig. 2, the retaining ring 1 comprises an annular body 2 and an operating part 4. The annular body 2 has an opening 3. When the retaining ring 1 is not operated, the inner diameter of the annular body 2 is smaller than the diameter of the rotor shaft 11 but larger than the diameter of the groove 11A, while the size of the opening 3 is smaller than the diameter of the groove 11A, and the retaining ring 1 can thus be clamped in the groove 11A.

The operating part 4 is arranged at two sides of the opening 3, and comprises operating holes 5 arranged at two sides of the opening 3. The callipers for operating the retaining ring 1 can be inserted into the operating holes 5 through protrusions, and apply force to expand the opening 3 to a size larger than the diameter of the groove 11A of the rotor shaft 11, so as to clamp the retaining ring 1 into the groove 11A or remove the retaining ring 1 from the groove 11A.

When the retaining ring 1 rotates with the rotor shaft 11, the produced centrifugal force will also expand the opening 3 of the retaining ring 1. With the rotation speed of the electric machine 100 increases, the centrifugal force on the retaining ring 1 will also increase. When the rotation speed of the electric machine increases beyond a rotation speed threshold that the retaining ring 1 can sustain, the opening degree of the opening 3 allows the retaining ring 1 to detach from the rotor shaft 11, and the retaining ring 1 can no longer serve the function of limiting the axial displacement of the bearing 12. In one specific embodiment, this limitation limits the rotation speed of the electric machine 100 to a maximum speed of about 17000 RPM.

In order to increase the strength of the retaining ring 1 and increase the rotation speed threshold that it can sustain, the annular body 2 further comprises a reinforcing portion 6 arranged opposite the opening 3. Compared to the other parts of the annular body 2, the reinforcing portion 6 may comprise an increased size. For example, in the embodiment shown in Fig. 3, it is shown that the reinforcing portion 6 of the retaining ring 1 has an increased width. In Fig. 3, the portion of the annular body 2 outside the curved dashed line is a width-increased portion of the reinforcing portion 6. As shown in the figure, the increased width of the reinforcing portion 6 is variable, being largest at its center 61, and gradually decreasing from its center 61 towards two ends 62. Therefore, the reinforcing portion 6 transitions smoothly to other parts of the annular body 2. The size of the reinforcing portion 6 being largest at its center 61 can increase its ability to resist centrifugal force. For the retaining ring 1 used to constrain the axial position of the bearing on the rotor 10 of the electric machine 100, the width of the reinforcing portion 6 at its center 61 is constrained by the inner diameter of the outer ring 12B of the bearing 12, i.e., the contact between the reinforcing portion 6 and the outer ring 12B must be avoided. In particular, the increased width of the reinforcing portion 6 at its center 61 is roughly equivalent to the width of other parts of the annular body 2, i.e., the maximum width at the reinforcing portion 6 is approximately twice the width of other parts of the annular body 2.

Although not shown in the drawings, the reinforcing portion 6 may also have different structures. For example, the reinforcing portion 6 may have an increased thickness, and this increased thickness may also be variable, such that the reinforcing portion 6 has a maximum thickness at its center 61, and gradually decreases from its center 61 towards two ends 62. It should be noted that the reinforcing portion 6 may also have a constant size with the increased width or thickness that is unchanged.

By providing the reinforcing portion, the strength of the retaining ring according to the present disclosure is increased, so that the rotation speed threshold that it can sustain is increased. In one specific embodiment, the rotation speed of the electric machine 100 employing the retaining ring 1 according to the present disclosure can reach about 20000 RPM.

The reinforcing portion 6 of the annular body 2 increases the mass of the retaining ring 1 at a top side thereof, such that the mass center of the retaining ring 1 is shifted upwards from its center, so the balance of the retaining ring 1 is destroyed. As the retaining ring 1 rotates with the rotor shaft 11, the mass center of the retaining ring will shift from its rotation axis. In order to reduce or eliminate this imbalance, the retaining ring 1 is provided with balance holes 7 at the reinforcing portion 6.

The balance holes 7 can reduce the mass of the reinforcing portion 6, so that the mass center of the retaining ring 1 remains at its center. The retaining ring 1 can thus restore balance. In addition, because the balance holes 7 will not reduce the increased size of the reinforcing portion 6, they will not have a significant adverse impact on the reinforcement portion 6 in increasing the strength of the retaining ring 1.

Referring to Fig. 3, the retaining ring 1 may comprise 7 balance holes 7 which are symmetrical with respect to a diameter D passing through the center 61 of the reinforcing portion 6. It can be understood that the number of balance holes 7 can change according to requirements. It is also conceivable to provide only one balance hole 7 symmetrical with respect to the diameter D. In the embodiment shown in Fig. 3, the balance hole 7 has the form of an oblong hole. In different embodiments, the balance hole 7 may also have different shapes, such as a round hole, etc. In addition, the balance hole 7 may also be a blind hole, or have the form of a recess provided at the reinforcing portion 6.

According to another aspect of the present disclosure, a vehicle is proposed which comprises the electric machine mentioned above. The vehicle may be an electrified vehicle, such as a battery electric vehicle (BEV), a hybrid electric vehicle (HEV), a plug-in hybrid electric vehicle (PHEV), a range extended EV and a fuel cell electric vehicle (FCEV). The vehicle may also be a hydrogen powered vehicle.

Certain features, structures or characteristics in one or more embodiments of the present disclosure may be combined appropriately.

The above is a description of the present disclosure and should not be considered as a limitation thereof. Although several exemplary embodiments of the present disclosure have been described, those skilled in the art shall easily understand that many modifications can be made to the exemplary embodiments without departing from the novel teaching and advantages of the present disclosure. Therefore, all such modifications are intended to be comprised within the scope of the present disclosure as defined by the claims. It should be understood that the above is a description of the present disclosure and that the present disclosure should not be considered as being limited to the disclosed specific embodiments, and the modifications to the disclosed embodiments and other embodiments are intended to be comprised within the scope of the present disclosure.

## Claims

1. A retaining ring (1), comprising:
an annular body (2) comprising an opening (3);
an operating part (4) arranged at two sides of the opening (3), and comprising operating holes (5) arranged at two sides of the opening (3),
wherein, the annular body (2) further comprises a reinforcing portion (6) arranged opposite the opening (3).

2. The retaining ring (1) according to claim 1, further comprising a balance hole (7) arranged on the reinforcing portion (6).

3. The retaining ring (1) according to claim 2, wherein,
the balance hole (7) is symmetrical with respect to a diameter (D) passing through a center (61) of the reinforcing portion (6).

4. The retaining ring (1) according to claim 2 or claim 3, wherein,
the retaining ring (1) comprises multiple balance holes (7), the multiple balance holes (7) are symmetrical with respect to a diameter (D) passing through a center (61) of the reinforcing portion (6).

5. The retaining ring (1) according to claim 4, wherein,
the balance hole (7) is an oblong hole.

6. The retaining ring (1) according to any one of claims 1 to 3, wherein,
the reinforcing portion (6) has an increased width and/or an increased thickness.

7. The retaining ring (1) according to claim 6, wherein,
the increased width of the reinforcing portion (6) is variable, and/or the increased thickness of the reinforcing portion (6) is variable.

8. The retaining ring (1) according to claim 7, wherein,
the reinforcing portion (6) has a maximum width at its center (61), and gradually decreases from its center (61) towards two ends (62); and/or
the reinforcing portion (6) has a maximum thickness at its center (61), and gradually decreases from its center (61) towards the two ends (62).

9. The retaining ring according to any one of claims 1 to 3, wherein,
the retaining ring (1) is made by stamping.

10. An electric machine, comprising the retaining ring (1) according to any one of claims 1 to 9, wherein, the retaining ring (1) is used to constrain an axial position of a bearing on a rotor of the electric machine.

11. A vehicle, comprising the electric machine according to claim 10.
